# EUROPEAN PATENT SPECIFICATION

(11) **EP 0 333 452 B1**
(45) Date of publication and mention of the grant of the patent: **01.12.1993**
(21) Application number: 89302542.9
(22) Date of filing: 15.03.1989
(51) Int. Cl.: F16K 31/08, F16K 31/06

(54) **Two position valve**
Zweistellungsventil
Soupape à deux positions

(30) Priority: 16.03.1988 GB 8806272
(43) Date of publication of application: 20.09.1989
(73) Proprietor: EATON S.A.M., MC-98000 Monaco (MC)
(72) Inventor: Dragoni, Christian, F-06300 Nice (FR); De Raco, Maurice, F-06130 Grasse (FR)
(74) Representative: Douglas, John Andrew

(56) References cited:
- DE-C- 665 565
- GB-A- 1 490 033
- US-A- 2 322 911
- US-A- 2 983 278
- US-A- 4 690 371
- PATENT ABSTRACTS OF JAPAN

## Description

This invention relates to a fluid valve of the type operable in alternative states, in one of which an orifice communicates an associated port with an interior space within the valve, and in the other of which this orifice is closed, the orifice being conditioned by electromagnetically driven closure means.

Such valves are well known, but bias independent of the electricity supply urges the closure members to bring about one of the two conditions. If the other closure condition is desired, electrical energization is required as long as the other condition is to be maintained. The energization must overcome the bias by enough to ensure a good closure, and be maintained as long as this other closure condition is to be maintained. The consequent expense and risk of overheating, and automatic reversion to the first condition if the electrical supply fails or fuses can be often undesirable or dangerous. The invention seeks to avoid such adverse factors and to enable sustained operation in either condition of closure, without sustained electrical energization.

According to an embodiment, a valve of the above type is characterized in that separate electro-magnetic drivers have respective magnetic gaps in the interior of the valve, a permanent magnet having an axis defined by its two poles can move generally axially over a distance within said gaps between extreme positions, the closure means is coupled to the magnet such that one or the other orifice is closed according to which of its said extreme axial positions the magnet is at, and the separate drivers can drive the magnet to one or other of these by magnetic repulsion.

The closure means may be separate mushroom shaped bodies biased to closure of their orifices, the stems of the bodies being abutted end-on by the magnet at or near its extreme positions. The stems may pass, guided but with clearance for fluid passage, through bores in fixed armature portions. The space around the magnet may communicate directly with a third port.

Therefore, either of said extremes is a position of stability for the magnet, with this held to part of one magnetic circuit or to part of the other, eg an adjacent face of said bored armature portions. The electrical supplies need only be powerful enough to drive the magnet to its alternative position of stability, eg with a short dc pulse. Moreover the valve is bistable, in that it remains in either stable condition even if the supply suddenly fails.

It is known from GB-A-1 490 033 to operate an on-off valve by magnetic repulsion, with an axially sliding permanent magnet normally held by attraction against a core member, to give a single position of stability while saving a bias spring and space. There was no concern with alternative valve-open conditions, and therefore no teaching as to bistability; GB-A-1 490 033 discloses the pre-characterizing combination of Claim 1; the reminder of which completes definition of present invention.

DE-C-665 565 proposes a permanent magnet armature which can achieve two stable positions against alternative magnetizable abutments, and thereby also conditions a single orifice open or closed. Reversal of the condition involves also movement of a magnetic circuit member, also bistable. It does not disclose conditioning of an orifice by magnetic repulsion, or a three port valve, and has the complication of two separate bistably moving armatures.

An embodiment of the present invention is now described by way of example with reference to the attached diametrical section drawing of a bistable valve.

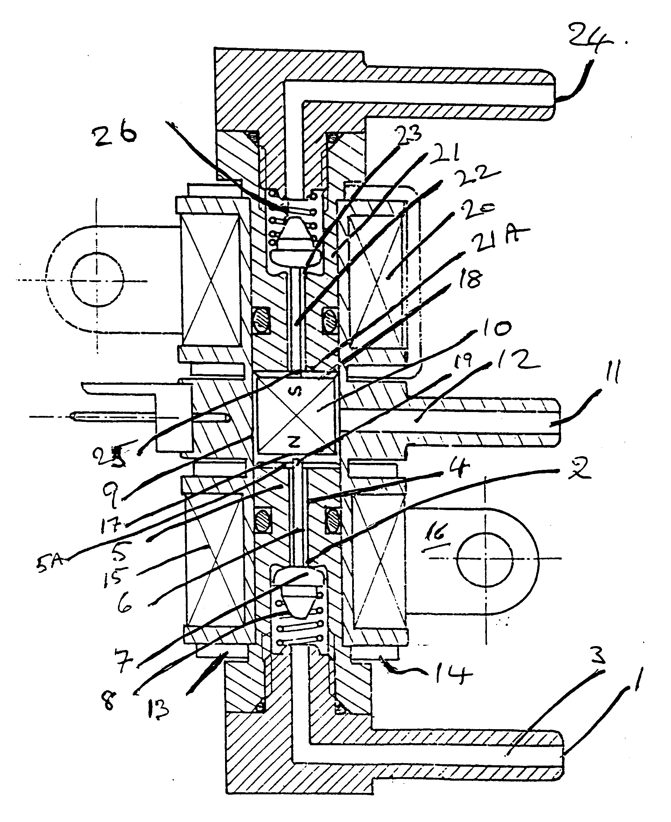

Referring to the drawing, a first port 1 communicates with a first orifice 2 via a conduit 3. Orifice 2 is the end of a bore 4 in a first fixed magnetic armature or core 5 which is a member of a first magnetic circuit. A first mushroom-shaped closure member has a stem portion 6 passing with clearance right through bore 4, and a diaphragm portion 7 which can seat against orifice 2 to close it. A coil spring 8 biases the closure member with the diaphragm against the orifice, ie closing off port 1 from an interior space 9 of the valve. Space 9 is partly occupied by a moving magnet 10 and communicates with a third port 11 through a conduit 12.

Bore 4 acts as a guide for stem 6 of the closure member to slide through it, while yet having clearance for allowing fluid passage past the stem. Good guidance with such clearance can be provided by the bore being circular and the stem being non-circular e.g. hexagonal or longitudinally fluted, ribbed or grooved (not illustrated); or the bore can be irregular and the stem section circular.

Space 9 includes an effective gap in a magnetizable circuit which includes fixed core 5 and other fixed magnetisable members 13, 14 which partly surround a solonoid coil 15 having a terminal 16. While a voltage of one polarity is applied to coil 15, a north pole is induced on the top face 5A (as viewed) of core member 5.

The magnet 10 has a permanent north pole on its lower face 17 (as viewed) and a south pole at its upper face 18. Thus the magnet has a vertical magnetic axis, and space 9 is arranged such that it can slide along its axis in guided manner, with enough play or appropriate shaping not to impede, or be impeded by, fluid moving in space 9. When coil 15 is energized, the two north poles at surfaces 5A and 17 repel each other, and magnet 10 moves upwards to its upper extreme axial position within space 9.

The top end 19 of the closure body stem 6 projects above the upper face 5A when biased by spring 8 in its upper position, closing orifice 2. When magnet 10 is in its lower extreme axial position, stem 6 is pushed downwards against spring 8, the orifice 2 is unblocked, and ports 1 and 11 are connected. Since the magnet now abuts core member 5, top face 5A may have a slot or other irregularity (not shown) to reduce obstruction to fluid passage between ports 1 and 11.

Magnet 10 is driven into this lower position by energization of a second coil 20, of an identical second electromagnetic driver, producing a south pole at the lower face 21A of a second core portion 21 (contrast the north pole at face 5A when the first oil is energized). A second valve closure body 22 operates in exactly analogous manner to control blocking of a second orifice 23 and hence another port 24, from communication with space 9. Face 21A may likewise need shaping to permit fluid flow freely across it.

In the position shown, the magnet 10 is in its upper extreme axial position, abutting the end 25 of stem 22, raising it against its spring bias 26. Orifice 23 is unblocked. End 19 of lower stem 6 is not abutted, so orifice 2 is blocked.

If we now do not energize either coil, the magnet stays high as shown, this being one stable position because a north pole is formed at face 18 by the proximity of the magnet. If we now apply a pulse of appropriate polarity only to coil 20, a south pole is induced at face 18, the magnet is repelled (assisted not only by the second spring 26 but also somewhat by the south pole induced by the magnet at the more distant face 5A). The magnet soon strikes the projecting end 19 of the lower stem 6, so the lower orifice 2 is opened and the upper orifice 23 is now closed. This is the other stable condition. Port 1, not port 24, is now connected to space 9 and port 11.

If now, the lower coil 15 is pulsed, face 5A becomes a north pole for the duration of the pulse, and the magnet transits upwards to re-assume the upper stable position illustrated.

When the coils are not energized, the magnet is attracted differentially more to the face 21A or 5A whichever is nearest, whereby both positions are stable. The differential must be enough to override the spring bias of the opened valve. The reversing pulse must produce just enough magnetic field to overcome (1) this differential magnetic force (2) any friction or drag, particularly with surrounding fluid, and (3) the other spring bias.

The invention is thus, in its broadest expression, using alternative magnetic repulsive forces for brief periods, to reverse a magnetic polarity, and hence achieve an alternative one of two bistable conditions.

The closure members could in an alternative embodiment be arranged so that each closes against spring bias instead of the above described opening aginst spring bias. Also the shape of the magnet may be changed from that illustrated, eg to reduce friction, but the ability to participate in the magnetic gaps of the two separate circuits must be maintained.

The fluid may comprise a liquid, a gas or vacuum, ie anything that flows.

## Claims

1. A valve having an interior space (9) in fluid communication with a port (11), a first closable orifice (2) giving conditional access to said space from a respective port (1), closure means (6,7,4,22) for opening or closing the orifice (2) and coupled to a mobile permanent magnet (10), which magnet can be driven along its magnetic axis and in contact with the interior space (9) by a magnetic repulsion producible by an electromagnetic driver (15) but which magnet is otherwise held to a face (21A) of a magnetizable member (21) by attraction; characterized in that, in the position of the magnet when so driven by repulsion, the closure means conditions a second closable orifice (23) also associated with a respective port (24), and the magnet is held there by another magnetizable member (5,5A) by magnetic attraction thus enabling bistable positioning of the magnet; and from its said driven position, whereat the coupled closure means conditions the second orifice (23), the magnet can be driven, also by repulsion, by means of a further electromagnetic driver (20) in a generally symmetrical arrangement such that always one only (2 or 23) of the two orifices is closed, back to its first referred to position whereat it is held to the first magnetizable member (21,21A); and in that there is provided appropriate play or shaping within said space to allow relative movements of the magnet and fluid within said space; the orifices (2,23) thus providing conditional one-at-a-time coupling of their associated ports (1,24) to the interior space (9) and hence also to the associated port (11) of this latter.

2. A valve according to Claim 1, characterized in that the closure means comprises at least one closure member, which closure member (7) has an end (19) which is abutted by the magnet when it is repulsively driven, e.g. to open the orifice (2).

3. A valve according to Claim 2, wherein the closure means comprises respective closure members (7,22) guided by bores (4) in fixed core members (5,21), one end of each bore defining said closure orifices (2,23) and the other end of each bore having said closure member ends (19,25) projecting therefrom to receive one-at-a-time abutment by said magnet (10), whereupon the closure members are drivable one at the time to the respective positions opening the orifices.

4. A valve according to Claim 1, 2 or 3 wherein the conditionally closed ports comprise conduits extending axially of the magnet on opposite ends of the valve housing, the third port extends laterally from an intermediate point of the housing adjacent the magnet, and resilience (8,26) is provided for the closure members which is compressed on closure by said electromagnetic drivers (15,20).

## Patentansprüche

1. Ein Ventil mit einen Innenraum (9), der in Strömungsmittelverbindung mit einem Anschluß (11) steht, eine erste schließbare Zumeßöffnung (2), die zustand- oder bedingungsabhängigen (d. h. konditionellen) Zugriff auf den Raum von einem entsprechenden Anschluß (1) gibt, Schließmittel (6, 7, 4, 22) zum Öffnen oder Schließen der Zumeßöffnung (2) und gekoppelt mit einem beweglichen Permanentmagneten (10), wobei der Magnet entlang seiner magnetischen Achse und in Kontakt mit dem Innenraum (9) angetrieben werden kann, durch ein magnetisches Abstoßen, das durch einen elektromagnetischen Treiber (15) erzeugbar ist, wobei der Magnet ansonsten an einer Stirnfläche (21A) eines magnetisierbaren Gliedes (21) durch Anziehungskraft gehalten wird; dadurch **gekennzeichnet,** daß:
in der Position des Magneten, wenn er so durch Abstoßen angetrieben wird, die Schließmittel eine zweite schließbare Zumeßöffnung (23), die auch mit einem entsprechenden Anschluß (24) assoziiert ist, konditionieren, und der Magnet dort durch ein anderes magnetisierbares Glied (5, 5A) durch magnetisches Anziehen gehalten wird, womit bistabiles Positionieren des Magneten ermöglicht wird; und
der Magnet von seiner getriebenen Position, in der die gekoppelten Schließmittel die zweite Zumeßöffnung (23) konditionieren, auch durch Abstoßen angetrieben werden kann, und zwar mittels eines weiteren elektromagnetischen Treibers (20) in einer im allgemeinen symmetrischen Anordnung, so daß nur eine (2 oder 23) der zwei Zumeßöffnungen geschlossen ist, und zwar zurück zu seiner ersten in Bezug genommenen Position, wo er an dem ersten magnetisierbaren Glied (21, 21A) gehalten wird; und
ferner dadurch gekennzeichnet, daß geeignetes Spiel oder Formen innerhalb des Raums vorgesehen ist, um eine relative Bewegung des Magneten und des Strömungsmittels innerhalb des Raums zu ermöglichen, wobei die Zumeßöffnungen (2, 23) somit ein zustandsmäßiges bzw. bedingtes Koppeln, und zwar eines zu einer Zeit, der assoziierten Anschlüsse (1, 24) mit dem Innenraum (9) vorsehen und somit auch des assoziierten Anschlußes (11) des Raums (9).

2. Ventil nach Anspruch 1, dadurch gekennzeichnet, daß die Schließmittel mindestens ein Schließglied aufweisen, wobei das Schließglied (7) ein Ende (19) besitzt, das durch den Magneten berührt oder in Angeschlag gebracht wird, wenn er abstoßend angetrieben wird, zum Beispiel zum Öffnen der Zumeßöffnung (2).

3. Ventil nach Anspruch 2, wobei die Schließmittel entsprechende Schließglieder (7, 22) aufweisen, die durch Bohrungen (4) in festen Kerngliedern (5, 21) geführt sind, wobei ein Ende jeder Bohrung die Schließzumeßöffnungen (2, 23) definieren und das andere Ende jeder Bohrung die schließgliedenden (19, 25) besitzen, die von dort hervorspringen, um einen Anschlag, und zwar einen zu einer Zeit, durch den Magneten (10) zu empfangen, woraufhin die Schließglieder antreibbar sind, und zwar eines zu einer gegebenen Zeit, in die entsprechenden Positionen zum Öffnen der Zumeßöffnungen.

4. Ventil nach Anspruch 1, 2 oder 3, wobei die zustandsabhängig oder konditionell geschlossenen Anschlüsse Leitungen aufweisen, die sich axial von dem Magneten an gegenüberliegenden Enden des Ventilgehäuses erstrecken, wobei sich der dritte Anschluß lateral von einem Zwischenpunkt des Gehäuses benachbart zu dem Magneten erstreckt, und wobei Elastizität (8, 26) für die Schließglieder vorgesehen wird, die beim Schließen durch die elektromagnetischen Treiber (15, 20) zusammengedrückt werden.

## Revendications

1. Soupape possédant une chambre intérieure (9) en communication fluidique avec un orifice (11), un premier orifice (2) pouvant être fermé procurant un accès conditionnel à ladite chambre depuis un orifice respectif (1), des moyens de fermeture (6, 7, 4, 22) pour ouvrir ou fermer l'orifice (2) et couplés à un aimant permanent mobile (10), aimant pouvant être déplacé le long de son axe magnétique et en contact avec la chambre intérieure (9) par une répulsion magnétique pouvant être créée par un organe d'excitation électromagnétique (15), mais lequel aimant est autrement maintenu sur une face (21A) d'un élément magnétisable (21) par attraction ; caractérisée en ce que, dans la position de l'aimant lorsqu'il est ainsi mû par répulsion, les moyens de fermeture conditionnent un second orifice pouvant être fermé (23) également associé à un orifice respectif (24), et l'aimant est maintenu dans cette position par un autre élément magnétisable (5, 5A) par attraction magnétique, permettant ainsi un positionnement bistable de l'aimant ; et à partir de ladite position entraînée, dans laquelle les moyens de fermeture couplés conditionnent le second orifice (23), l'aimant peut être déplacé, également par répulsion, au moyen d'un autre organe d'excitation électromagnétique (20) dans un agencement généralement symétrique de telle sorte que toujours l'un seulement (2 ou 23) des deux orifices est fermé, en retour à sa première position indiquée de telle sorte qu'il soit maintenu vers le premier élément magnétisable (21, 21A) ; et en ce que un jeu ou façonnage approprié est prévu à l'intérieur de ladite chambre pour permettre des déplacements relatifs de l'aimant et du fluide à l'intérieur de ladite chambre ; des orifices (2, 23) procurant un couplage conditionnel un à la fois de leurs orifices associés (1, 24) à la chambre intérieure (9) et ainsi également à l'orifice associé (11) de cette dernière.

2. Soupape selon la revendication 1, caractérisée en ce que les moyens de fermeture comportent au moins un élément de fermeture, lequel élément de fermeture (7) possède une extrémité (19) se trouvant en butée de l'aimant lorsqu'il est mû par répulsion, par exemple pour dégager l'orifice (2).

3. Soupape selon la revendication 2, dans laquelle les moyens de fermeture comportent des éléments de fermeture respectifs (7, 22) guidés par des alésages (4) dans des éléments de noyau fixes (5, 21), une extrémité de chaque alésage définissant lesdits orifices de fermeture (2, 23) et l'autre extrémité de chaque alésage ayant lesdites extrémités d'élément de fermeture (19, 25) en faisant saillie pour venir en butée un à la fois dudit aimant (10), après quoi les éléments de fermeture peuvent être entraînés un à la fois vers les positions respectives ouvrant les orifices.

4. Soupape selon la revendication 1, 2 ou 3, dans laquelle les orifices fermés conditionnellement comportent des conduits s'étendant axialement à l'aimant sur des extrémités opposées du boîtier de soupape, le troisième orifice s'étend latéralement depuis un point intermédiaire du boîtier adjacent à l'aimant, et une élasticité (8, 26) est prévue pour les éléments de fermeture qui sont comprimés lors de la fermeture par lesdits organes d'actionnement électromagnétiques (15, 20).
